# EUROPEAN PATENT SPECIFICATION

(11) **EP 0 612 281 B1**
(45) Date of publication and mention of the grant of the patent: **19.04.2000**
(21) Application number: 92924433.3
(22) Date of filing: 13.11.1992
(51) Int. Cl.: B32B 5/00, B41N 10/04

(54) **COMPRESSIBLE PRINTING BLANKET AND METHOD OF MAKING SAME**
KOMPRIMIERBARES DRUCKTUCH UND VERFAHREN ZUR HERSTELLUNG
BLANCHET D'IMPRESSION COMPRESSIBLE ET PROCEDE DE FABRICATION ASSOCIE

(30) Priority: 15.11.1991 US 794261; 14.02.1992 US 835795
(43) Date of publication of application: 31.08.1994
(73) Proprietor: REEVES BROTHERS, INC., Spartanburg, SC 29304 (US)
(72) Inventor: BYERS, Joseph, L., Inman, SC 29349 (US); FLINT, W., Toriran, Spartanburg, SC 29301 (US); KERR, Richard, C., Rutherfordton, NC 28139 (US)
(74) Representative: Jump, Timothy John Simon
(86) International application number: US9209791
(87) International publication number: WO9309941

(56) References cited:
- GB-A- 885 317
- GB-A- 2 033 395
- JP-A- 3 158 295
- US-A- 3 795 568
- US-A- 4 015 046
- US-A- 4 042 743
- US-A- 4 044 176
- US-A- 4 081 318
- US-A- 4 093 764
- US-A- 4 303 721
- US-A- 4 770 928
- US-A- 4 981 750
- US-A- 5 006 400
- US-A- 5 069 958

## Description

This invention relates generally to the field of offset printing and more particularly to compressible printing blankets and methods of making same for use in offset printing presses.

The use of so-called "printing blankets" in offset lithography has been well known for a number of years. In the process of offset lithographic printing, a rotary cylinder is covered with a printing plate having a positive image area receptive to oil-based inks and repellent to water, as well as a background area in which the opposite is true. The printing plate is rotated so that its surface contacts a second cylinder covered with a rubber-surfaced ink receptive printing blanket. The ink present on the image surface of the printing plate transfers, or offsets, to the surface of the blanket. Paper or other sheet stock to be printed is then passed between the blanket covered cylinder and a rigid back-up cylinder to transfer the image from the surface of the blanket to the paper.

During the steps in which the image is transferred from the plate to the blanket and subsequently wherein the image is transferred from the printing blanket to the paper, it is important to ensure intimate contact between the two contacting surfaces. This is ordinarily achieved by positioning the blanket covered cylinder and the supporting cylinder it contacts so that there is a fixed interference between the two. Thus, the blanket is compressed throughout the printing run to a fixed depth, typically about 0.0508 to 0.152mm (0.002 to 0.006 inches). Moreover, it is also important that this compression be maintained uniformly over the entire blanket.

This fixed interference between the blanket and the paper substrate may, for example, be accomplished in inserting one or more thin layers of paper or the like between the blanket and the surface of the cylinder to build up the thickness of the blanket. This process is known as "packing" a blanket.

Early printing blankets used in connection with rotary printing operations consisted of a fabric substrate backing layer bonded to a rubber printing face (see, e.g., U.S. patent No. 2,099,024 to Lewis). Problems with these early blankets stemmed from the fact that rubber is non-compressible when confined. Thus, when pressure was applied to the non-compressible rubber surface, the rubber would distort and cause uneven rolling waves at the nip, i.e., the point between the printing blanket and the impression cylinder. Such distortions would cause ink smearing and compression of the textile backing. Further, repeated compression of rubber blankets during the printing operation tended to cause permanent impressions in the blanket and irreparable damage to the textile backing.

In an attempt to solve many of the aforementioned problems, compressible printing blankets were developed. Compressible blankets today generally consist of a multi-ply fabric substrate base with a compressible cellular layer or layers and a vulcanized elastomeric face. One such printers' blanket is described in GB Patent No. 885,317 to Goodyear Tyre & Rubber Company. In that patent, the compressible layer is formed from a layer of vulcanised rubber or rubberlike material laminated onto a substantially flexible inextensible backing. As a result of the vulcanisation, the surface of the blanket is covered with microporous openings. Another such compressible blanket is described in U.S. patent No. 3,147,698 to Ross. In that patent, the compressible layer is formed by impregnating a highly porous felted fibrous web with an elastomeric material in a solution or water dispersion, such as a natural rubber latex, followed by curing the web under such conditions that it retains a high degree of porosity. Thus, a large volume of minute voids or air spaces were obtained in the finished sheet to constitute the compressible layer which is responsible for the compressibility property of the web.

Subsequent improvements in offset printing blankets to date have been directed toward achieving the desired properties of volume compressibility, resistance to lateral distortion and sufficient firmness, i.e., the resiliency to "spring back" after use. A blanket having all these properties may be formed by gluing together several layers of material with an adhesive, with each layer possessing one or more of the desired properties. Typically, a layer of firm, non-extensible woven material is used to provide resistance to circumferential and lateral distortion of the blanket. Compressibility and resiliency have been achieved by selecting layers having such characteristics in the construction of the blanket.

Conventional offset printing blankets typically include a multi-ply fabric base and a vulcanized elastomeric face. Preferably, to enhance the compressibility of such blankets, one or more cellular compressible layer(s) may be buried within or attached to the fabric between the base and the elastomeric face of the blanket. These compressible layers may be formed with, for example, a plurality of either open (see, e.g., U.S. patent No. 4,442,895 to Shimura) or closed (U.S. patent No. 4,042,743 to Larson) cell structures distributed within an elastomeric matrix. In the Larson patent, the compressible layer is sandwiched between one or more layers of fabric. The compressible layer is made by incorporating resin microballoons in suitable proportions in an elastomer. Incorporation of such balloons in the compressible elastomeric layer imparts a fine-celled structure of closed cells.

Another method of producing such a closed cell or partially closed cell rubber containing microballoons is described in U.S. patent No. 3,219,600 to Rucker.

Similar uses of microballoons or hollow microspheres in the compressible layers of printing blankets are disclosed in U.S. patent Nos. 3,700,541 to Shrimpton et al, 3,983,287 to Goossen et al, and 4,770,928 to Gaworowski et al. In these patents, hollow microballoons are impregnated in a resilient polymer or the like to form a compressible elastomeric sheet for use as an intermediate layer in a printing blanket.

Compressible layers of the type described above are particularly useful in preventing the occurrence of print distortion, i.e., a lack of definition caused by a budge/deformation which often otherwise occurs in the printing surface of the blanket adjacent to the nip of the printing press. The compressible layer also serves to absorb the effect of a "smash", which is a substantial deformation of the blanket caused by a temporary increase in the thickness of the material to be printed, such as by the accidental introduction of more than one sheet of paper between the printing blanket and the back up cylinder during the printing operation.

Blankets of the type described above suffer from a variety of deficiencies, however, which negatively affect their durability and print quality. For example, they are susceptible to caliper loss due to compression set of one or more of the following: the fabric(s) used to form the support layer(s), the elastomeric compounds used to form the face and, where included, the adhesive layers for binding adjacent blanket segments, and/or, in the case of compressible blankets, the compressible matrix. In addition, printing blankets of the type described above also frequently suffer from wicking of ink, water and solvents commonly used in a press room, through either the exposed cut edges of the blankets or, in instances where these edges are protected by the application of a sealant, directly through cracks in the blanket or the bottom ply of the fabric.

Further, in blankets having a cellular compressible layer or "ply" (these terms are used interchangeably herein) the compressible ply is typically located below a single ply of fabric or else directly below the elastomeric printing face. This arrangement exposes the compressible layer to the high stress present at the adjacent printing face of the blanket, thus reducing the smash resistance of such blankets and increasing the occurrence of wicking through the cells therein.

Additionally, the application of the elastomeric printing face on prior art blankets is typically performed with the use of a technique known as knife over roll spreading, in which the face material is first dissolved in an organic solvent prior to its application upon the fabric ply or compressible layer. Such organic solvents, however, require sophisticated environmental controls to render them safe for use in the work place.

An application of this technique is described in US Patent No. 4,303,721 (Rodriguez et al.). This patent also suggests reducing the stickiness of the printing face by dusting talc onto its surface prior to vulcanisation.

Furthermore, the printing surface may be covered with paper, together with a fine talc, prior to placing the blanket in the vulcanising oven. Such a technique is described in US Patent No. 4,042,743 (Larson et al.) and in US Patent No. 4,770,928 (Gaworowski et al.). In this latter patent, the paper has a fine finish and is described as imparting smoothness to the printing blanket.

Furthermore, prior art printing blankets are often provided with surface profiles on their elastomeric printing face which fails to strike an acceptable balance between the print quality provided by this surface and its ability to release the printed stock in preparation for accepting the next impression from the printing cylinder.

An improved multi-ply laminated printing blanket for use in offset printing has now been developed which substantially overcomes the drawbacks of the prior art blankets discussed above.

In accordance with the present invention, there is provided a printing blanket comprising an elastomeric printing face having a surface profile with a roughness average of above about 0.6 µm (microns) and below about 0.95 µm (microns) to enhance releasability while reducing dot gain during printing operations.

Preferably, printing blankets in accordance with the present invention comprise at least one fabric ply and a compressible layer beneath the printing face and can further comprise a subface immediately beneath the printing face, formed from a high durometer, high tensile, low elongation elastomeric compound. In preferred embodiments, printing blankets in accordance with the invention comprise at least two fabric plys between the compressible layer and the elastomeric printing face, which protect the compressible layer from at least a portion of the stresses occuring at said printing face. The elastomeric printing face preferably has a surface profile with a roughness average of between 0.7 to 0.9 µm (microns). The printing blanket can further comprise a base fabric ply with a protective coating thereon, to prevent absorption and wicking of water, inks and solvents therethrough. The protective coating, preferably, comprises a fluorocarbon or a silicone material.

In further preferred embodiments, at least one of the fabric plys comprises a plurality of warp and fill fibers or yarns forming a fabric substrate, and a binder material substantially impregnating at least one side of the fabric substrate; the binder material providing no substantial contribution to the overall thickness of the partially impregnated fabric substrate and containing a plurality of cells in an amount sufficient to impart increased compressability properties to the fabric ply. In preferred arrangements the warp fibers or yarns have a tensile strength of at least about 26.25kN/m (150 pounds per inch), the fill fibers or yarns have a tensile strength of at least about 10.5kN/m (60 pounds per inch) and the fabric substrate has a weight of between about 0.14 and 0.27kg/m² (4 and 8 ounces per square yard). At least one of said fabric plys can be provided with a protective coating to prevent absorption and wicking of water, inks and solvents therethrough. Said protective coating can comprise a fluorocarbon or a silicone material.

Preferably, the compressible layer is comprised of a matrix having a plurality of closed cells distributed substantially uniformly therethrough and such that said layer has substantially uniform compression characteristics. Said matrix, preferably, is a flexible thermoplastic or elastomeric material.

The cells or closed cells can be formed from microspheres having a diameter of between about 1 and 200 µm (microns) and the microspheres are dispersed relatively uniformly throughout the binder material and/or the matrix. The microspheres can be formed from a material selected from the group consisting of thermoplastic resins, thermosetting resins, ceramics, glasses and sintered metals. The microspheres, preferably, include a surface coating to facilitate bonding with the binder material or the matrix. In preferred embodiments, the microspheres are present in the binder material and/or the matrix at a loading of about 4 to 90 percent by weight.

In an alternative embodiment, the cells or closed cells can be formed from gas bubbles which are trapped within the binder material and/or the matrix.

The binder material, preferably, is a thermoplastic resin, a thermosetting resin, a polyurethane or a natural or synthetic elastomer. The elastomer can be a nitrile, neoprene or an acrylic elastomer.

In a second aspect, the invention provides a method of preparing a printing blanket having enhanced releasability and reduced dot gain during printing operations which comprises providing a printing blanket having at least one fabric ply, an elastomeric printing face and a compressible layer positioned therebetween; and grinding the printing face to a surface profile with a roughness average of above about 0.6 µm and below about 0.95 µm. A subface can be provided beneath the printing face to improve the stability of the printing face and its resistance to cutting, and a supporting fabric ply can be included to support the other layers. The supporting fabric ply can include a protective coating to prevent absorption or wicking of fluids into the blanket.

In a preferred embodiment of the second aspect of the invention, at least one additional fabric ply is used and the additional fabric ply(s) are located between the printing face the compressible layer. At least one of the fabric plys can be a compressible fabric ply and the printing face can be ground to have a surface profile with a roughness of between 0.7 and 0.9 µm. The compressible fabric can be made by dipping a fabric substrate into a latex solution of elastomeric material that contains microspheres therein and removing excess matrix material by scraping the fabric with a doctor blade.

Thus, in embodiments the present invention provides a printing blanket which has improved resilience and resistance to caliper loss in contrast to blankets known in the prior art. The present invention also provides a printing blanket having improved resistance to swelling and delamination caused by absorption and wicking of ink, water and solvents commonly used in a press room. Furthermore, these printing blankets can additionally provide improved smash resistance and improved packing latitude without sacrificing print quality.

In addition, the present invention provides a printing blanket having an improved resistance to cutting of the elastomeric printing face as well as to the consequent swelling and delamination which can occur as a result of such cuts, and wherein said face has a specific surface profile which reduces dot gain during printing while maintaining good release characteristics. Moreover, the present invention produces these blankets by a technique which utilizes reduced levels of processing solvents.
Fig. 1 is a sectional view, greatly enlarged, through a laminated compressible printing blanket manufactured according to the present invention;
Fig. 2 is a graph illustrating and comparing the smash test results obtained with a prior art printing blanket (i.e., the 2000+SR blanket) versus the 5056 blanket and
Fig. 3 graphically illustrates and compares the results of smash tests carried out between a prior art blanket (i.e., the 5060 blanket) and two variations of blanket (the 5063 SR and 5063 SRF blankets).

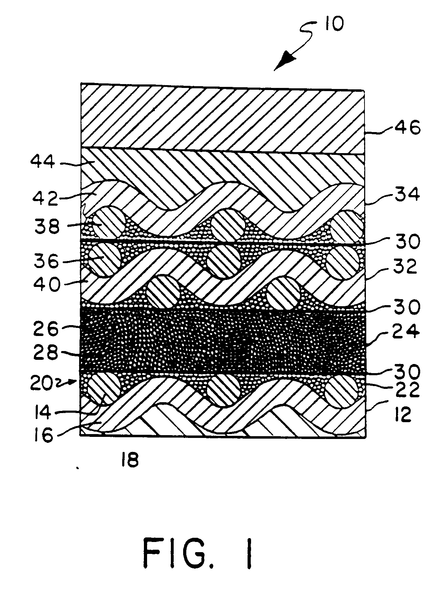

As illustrated in Fig. 1, printing blanket 10 of the present invention is comprised of several plys laminated into a single unitary structure. For convenience in understanding the invention, each of these plys, together with their associated features, will be discussed below in turn.

For purposes of the present discussion, the terms "bottom", "lower" and the like are used to refer to that portion of an individual ply or stack of plys which is most nearly adjacent the printing cylinder upon which the blanket of the invention is installed. Conversely, the "top" or "upper" portion of a single ply or stack of plys is that portion thereof which is located or positioned furthest from the printing cylinder.

The lowermost ply 12 of blanket 10 incorporates a novel fabric substrate which imparts improved resistance to lateral distortion, as well as wicking due to transport of solvent or gas, and caliper loss, while also improving the compression set, resilience, reboundability, smash resistance and compressibility properties of the blanket.

The fabric substrate of ply 12 is comprised of warp fibers 14 and fill fibers 16, which are formed of natural or synthetic material. These fibers may be woven or non-woven and produced from spun or filament yarn of the desired length. Cotton, polyester, nylon and rayon are typical materials which may be used as fibers or yarns of the fabric substrate of ply 12.

Preferably, the warp fibers are formed from natural material such as cotton, whereas the fill fibers are comprised of a synthetic textile such as, e.g., rayon. Both the warp and fill fibers or yarns should have a tensile strength of at least 206.9 kPa (30 psi). The substrate preferably has a yarn count per cm (inch) ranging between about 21.67-24.034 (55-61) (warp) and 22.458-24.822 (57-63) (fill). The fabric substrate ranges between about 0.197 to 0.210kg/m² (5.8 to 6.2 ounces/sq. yd.) in weight and from 0.356 to 0.406mm (0.014 to 0.016 inches) in thickness (also referred to as "gauge"). The warp direction has a tensile strength of at least about 26.25kN/m (150 pounds/inch) whereas that of the fill direction is at least about 10.5kN/m (60 pounds/inch). Moreover, in the preferred embodiment, the fabric substrate should be capable of no more than about 1.9% residual stretch.

Fabrics suitable for use in the present invention (in addition to those set forth in the Example provided below detailing the best known mode of practicing the invention) include, but are not limited to, those disclosed in U.S. patent No. 4,042,743 to Larsen et al.. In general, in the fabric plys used in the present invention, the fiber or yarn counts per centimetre (inch) for both warp or fill directions can vary between 7.9 (20) and 59 (150), depending upon the denier of the fiber or yarn. Moreover, fabric weights of 0.068 (2) to 0.27 (8), preferably about 0.14 (4) to 0.27kg/m² (8) (ounces per square yard) and thicknesses of 0.13 to 0.76mm(0.005 to 0.03") can be utilized for particular applications of the various fabric plys of this invention.

Lowermost fabric ply 12, as well as intermediate fabric plys 32 and 34 (discussed below), are each dipped in and thoroughly saturated with a coating material 18 to render these plys ink, water and solvent repellant. In particular, the coating material is selected to meet certain non-wicking test requirements. The fabric wicking test is carried out by covering the fabric, as described above, with the non-wicking coating material, applying a quantity of a solvent to a lower edge thereof and determining the upward distance (in mm.) that the solvent travels in one hour within the fabric. The solvents tested with the procedure outlined above include water, ronolene and toluene. Most preferably, there should be no wicking of these solvents at all within the fabric. However, penetration by toluene of up to about twenty (20) mm and about 5 mm by ronolene has been found to still provide acceptable results with the use of such coated fabrics in the printing blanket of the invention. Many fabric manufacturers are able, as discussed below, to provide satisfactory coatings which meet or exceed these requirements.

This coating treatment, described below in further detail, does not have any significant effect upon the coefficient of friction between the inner surface of blanket 10 and the outer face of the printing cylinder and thus does not appreciably increase wear on blanket 10 caused due to the rotation of the printing cylinder. Thus no special compounding and/or curing is required in the case of bottom fabric ply 12.

The coating material is preferably a fluorocarbon having either a solvent or water base and is of such low viscosity, i.e., essentially the same as water, that complete penetration of the fabric plys so treated is possible. This coating treatment effectively eliminates the possibility of wicking, e.g., of inks, water and/or solvents through interior channels within the fabric. Thus it is no longer necessary, as practiced in the prior art, to seal the edges of the blanket to prevent wicking from the open, cut edges. Alternately, however, numerous other treating materials, such as silicone compounds having similar water and solvent-resistant properties, may be utilized in place of the fluorocarbon material.

As non-limiting examples, a number of useful fluorocarbon and silicone coating compounds are set forth in Japanese patent publication No. 2116597 published May 1, 1990.

These materials include AG (i.e., "Asahi Guard") 310, 340, 530, 550, 640, 650, 710, 730, 740, 780, 800; S (i.e., "Surflon") 111, 112, 113, 121, 131, 132, 141, 145, 381, 382, all of which are products of Asahi Glass Co., Ltd.; "Unidyne" DS-101, 102, 202, 301, 401, 402, 501, 502 (produced by Daikin, Ltd.); "Paraguard" L80, 30, 61, 0-400, 650, F-5 (produced by the Oh-hara Palladium Chemical Co; Ltd.); "New-Stecker" AR 10, SWR, WR 40, WR 44, WR 50, NK Guard (produced by Nikka Chemical Industrial Co., Ltd.) and, "Solvent" TX, a product of Hoeschst Japan, Ltd.

The coating material(s) chosen for use with the invention may, for example, be applied before the various plys are laminated together to form blanket 10 by first impregnating these plys with the coating material and then drying the coated fabric by methods known in the art. Alternately, the coating finish may be applied after blanket 10 is formed with the use, e.g., of means such as a roll coater, a sprayer, a brush, or the like.

As noted above, "standard" fabrics, i.e., those typically used in forming fabric plys for offset printing blankets, are available with a protective coating as described above from numerous textile manufacturers, including Wamsutta, a division of Springs Industries, Inc. and Technofabric S.p.A. Capital expenditures and production time may therefore be minimized on the part of blanket manufacturers by using such fabrics to form the fabric plys, rather than incorporating a coating step as described above into the blanket manufacturing process. However, although as noted above such coated fabrics are known in the art, they have not previously been used in the production of compressible printing blankets of the type described herein.

Fabric ply 12 is additionally spread coated, calendared, dipped or otherwise contacted, upon only its upper surface, however, with a matrix material 20. Suitable matrix materials include thermoplastic resins, thermosetting resins, polyurethanes, and natural or synthetic elastomers. PVC and other polyolefins are suitable thermoplastic resins, while preferred polyurethanes, having improved hydrolytic stability, are disclosed in U.S. patents 5,001,208 to Damewood et al. and 5,013,811 to Ross et al.

One skilled in the art is aware of a variety of techniques for applying these matrix materials in liquid form (i.e., by a solvent solution or a latex dispersion) to a fabric substrate.

The elastomers best suited for use in this invention are of the acrylonitrile, neoprene, and acrylic families. Polysulfides, alone or in combination with acrylonitrile or neoprene, can also be used. Any natural or synthetic elastomer can be used if desired, and such materials are preferred for use with the invention.

As noted above, the elastomer may be applied to the fabric as a latex dispersion or by a solvent carrier. Latex cements of these elastomers are preferred. The elastomer most preferred for forming the matrix is a self-curing nitrile latex elastomer having a total solids content of between about 30 - 60%, preferably between about 45 - 50% and most preferably about 47%. The pH of this material should be slightly acidic, i.e., preferably in the range of about pH 6-7. The preferred viscosity for the matrix material ranges between about 14 to 20 PaS (14,000 to 20,000 cps) and is most preferably about 15 PaS (15,000 cps).

The matrix material used with the fabric plys additionally contains a plurality of cells therein in an amount sufficient to impart increased compressibility to the fabric. In a first embodiment, the cells may be closed cells formed with the use of a plurality of microspheres. Generally, the microspheres are formed from materials such as, e.g., thermoplastic resins, thermosetting resins, ceramics, glass and sintered metals. A preferred thermosetting resin for forming the microspheres used in the invention is a phenolic resin having a density, of between about 0.01 and 0.05 grams per cubic centimeter. The microspheres range in diameter between about 1-200 and preferably 50-130 microns, with an average size of about 90 µm being most preferred. They are dispersed relatively uniformly throughout the matrix material such that, upon application of the matrix to the fabric ply, they become thoroughly embedded in its interstices. Thus, when applied, the microsphere loaded material described herein will substantially impregnate and encapsulate the fabric substrate on its upper side.

Generally, the microspheres are uniformly distributed throughout the elastomer in such a way as to avoid any appreciable crushing of the microspheres. Additionally, the microspheres are incorporated in the elastomeric material at a loading of about 4 - 90% and preferably 10 - 70% of the solid contents. This percentage will vary based on such factors as microsphere dimension, wall thickness and bulk density, or if blowing agents are additionally incorporated within the matrix.

To form the cells in the embodiment described above, any of a wide variety of microspheres 22 can be added to a solution or dispersion of the matrix. If solvent solutions are utilized, the selected microspheres must be resistant to chemical attack from the solvents.

Several acceptable types of thermoplastic microspheres for use with the present invention are marketed, for example, by Expancel and Pierce & Stevens. Microspheres of a thermoplastic resin are preferred for this embodiment.

Once the microspheres are dispersed in the matrix and the matrix is applied to the fabric substrate, the thus coated fabrics are then, for example, passed over hot cans or festooned or passed through an oven at a temperature sufficient to cause complete expansion of the microspheres so that the matrix becomes locked into the fabric. During this so-called "expansion pass", additional coatings for particular applications may also be applied to the fabric substrates. Alternately, however, if pre-expanded microspheres are utilized in treating the fabric, the heating step described above may be eliminated.

If desired, the microspheres may further include a coating thereon to facilitate their bonding with the matrix material. Pierce & Stevens markets microspheres under the trade name DUALITE, which includes any one of a variety of coatings thereupon, such as talc, calcium carbonate, zinc oxide, titanium dioxide, mica, calcium sulfate, barium sulfate, antimony oxide, clay, silica, and aluminum trihydrate. Proper selection of the sphere/coating composite further enhances the bonding between the fabric and the elastomer matrix. U.S. patent No. 3,615,972 to Morehouse discloses a number of techniques used in manufacturing microspheres of the type suitable for use in the present invention.

In an alternate embodiment, cells may be formed in the matrix by mechanically inducing air into a matrix forming material before it is applied to the fabric, such as by aerating or stirring. Another means of creating cells is to use chemical blowing agents (the term foaming agents also is used) that are decomposable into games as they are cured in a compound. One such class of blowing agents are the Cellogens™ which are manufactured by Uniroyal (Cellogen is a registered trademark of Uniroyal). Cellogens are decomposable in the presence of heat, which may be applied during curing. Many other types of blowing agents are commercially available with a wide range of decomposition characteristics, such as those set forth in U.S. patent No. 4,548,858 to Meadows (see, e.g., col. 4, lines 53-66).

The compressible fabric ply described above is particularly useful in applications such as the presently disclosed printing blanket in that, as is well known, space is at a premium within a printing blanket and thus the limited dimensions available to the various plys of such blankets severely limits the structural options available to designers of such blankets. It has now been found that at least a portion of the compressibility previously provided mainly by the compressible polymer ply, may be transferred to the fabric plys, thus permitting a concurrent reduction in the size of the associated compressible layer.

Located directly above fabric ply 12 is compressible layer 24. Layer 24 comprises a plurality of closed cells 26 embedded within a binder 28. Cells 26 resist the greater and more permanent deformation within blanket 10 which would otherwise occur in the absence of such a layer.

Binder 28 is made from a suitable resilient polymer matrix, into which a quantity of cell-forming materials are evenly dispersed to form a compound. These cell-forming materials may be selected from the same materials used to form the cells in fabric ply 12, i.e., microspheres (coated or uncoated) and/or blowing agents. As matrix materials, elastomers are preferable with a neoprene/nitrile blend being most preferred.

Typically the compound is applied to fabric ply 12 to form the compressible layer thereupon by depositing a number of thin layers in successive applications. Layers of about 0.05 mm (0.002 inches) are a suitable thickness for this application.

Compressible layer 24 may be adhered to fabric ply 12 with, for example, the use of a layer of a suitable adhesive 30. Adhesive 30 is preferably a compounded nitrile rubber but a variety of water and solvent based elastomeric adhesives, which are well known in the art may be used, if desired, in its place. The particular adhesive will depend upon the specific elastomers utilized to form the plys. This bonding may alternately or additionally be effected by a chemical reaction occurring between fabric ply 12 and the compound triggered during the subsequent curing process. Still further, compressible layer 24 may alternately be formed by applying the compound to a release layer, curing the composition, stripping the cured compound from its release layer and adhering ply 24 to fabric ply 12 with the use of an adhesive layer 30. The compound may also be applied to fabric ply 12 by extrusion or calendaring. Alternately, if desired, compressible layer 24 may be applied to the lower portion of a fabric ply 32 (discussed below) which is positioned directly above layer 24, instead of to the upper portion of fabric ply 12 as described above.

Located directly above compressible ply 24 is a multi-ply intermediate fabric stack comprising at least two fabric plys. For convenience in describing the invention, blanket 10 is shown in Fig. 1 with two fabric plys 32, 34, i.e., respectively a "center" and a "top" fabric ply, but this arrangement should not be viewed as limiting the invention since additional fabric plys (i.e., more than 2) may be incorporated at this location if desired for a particular application. Plys 32 and 34 are bonded each to the other and to compressible layer 24 with the use of a suitable adhesive 30 such as a compounded nitrile rubber.

Prior art compressible printing blankets have typically been constructed with the compressible ply being located under a single ply of fabric or directly under the printing face. An additional novel feature of the present invention which should be noted is that compressible layer 24 is located under at least two plys of fabric, i.e., 32 and 34, said plys being discussed in further detail below. This arrangement protects compressible layer 24 from the higher stresses typically found at the printing surface of such blankets, thus providing an enhanced degree of smash resistance to blanket 10, as well as increased resistance against the wicking of liquids through the cells.

Fabric plys 32 and 34 are similar in many respects to fabric ply 12 discussed above in that the fabric substrate of plys 32 and 34 is comprised of warp fibers 36, 38 and fill fibers 40, 42, respectively, formed of natural or synthetic material. These fibers, as in the case of ply 12, may be woven or non-woven and comprise spun or filament yarn of the desired length. Preferably, the warp fibers are formed from natural material such as cotton whereas the fill fibers are comprised of a synthetic textile such as, e.g., rayon. Both the warp and fill fibers or yarns should have a tensile strength of at least about 206.9 kPa (30 psi).

In a preferred embodiment, center ply 32 has a yarn count per centimetre (inch) ranging between about 29.5-31.5 (75-80) (warp) and 20.9-22.8 (53-58) (fill). The corresponding values for top ply 34 are respectively, 39.4-41.3 (100-105) (warp) and 30.3-32.3 (77-82) (fill). The fabric used to form ply 32 ranges in weight between about 0.166 to 0.18 kg/m² (4.9 to 5.3 ounces/sq. yd.), whereas that used in top ply 34 is between about 0.125 and 0.132 kg/m² (3.7 and 3.9 ounces/sq. yd). The thickness, i.e. gauge, of ply 32 ranges between about 0.267 and 0.292 mm (0.0105 and 0.0115 inch) while that of top ply 34 is between about 0.203 and 0.245 mm(0.008 and 0.010 inch). The warp direction of center ply 32 has a tensile strength of at least about 26.25kN/m(150 pounds/inch) whereas the corresponding value for top ply 34 is at least about 12.25kN/m(70 pounds per inch). The tensile strength in the fill direction of ply 32 is at least about 7kN/m(40 pounds per inch), whereas that of ply 34 is at least about 10.5kN/m(60 pounds per inch). In center ply 32, the fabric should be capable of no more than about 2.2% residual stretch, while the stretch of the top fabric ply 34 may range between about 6 and 10%.

In place of the fabrics used to form both fabric substrate 12 as well as plys 32 and 34, one could utilize a variety of alternate substrate materials such as porous plastic, paper or rubber sheets having the appropriate stretch and tensile strength. Plys 32 and 34 are positioned in adjacent face relation, with ply 32 moreover being in adjacent face relation with compressible layer 24.

A distinguishing feature between center ply 32 and top ply 34 is that, in center ply 32 both sides of the fabric are impregnated with a cell-forming material, i.e., preferably a plurality of microspheres evenly distributed within a matrix. In contrast, in top ply 34, only the bottom, i.e., lowermost, portion of the fabric is so treated, in a manner similar to that of fabric ply 12 which is also treated on only one side. When both sides of a fabric (such as center ply 32) are to be coated, the preferred method of application of the microsphere loaded matrix material is by use of a dip tank and squeeze rolls. Optionally, one or both of fabric plys 32 and 34 may be first thoroughly treated with a coating 18 of, e.g., a fluorocarbon or a silicone compound to render them ink, water and solvent repellant.

With the use of the dip tank technique, the fabric substrate is fed through a dip tank containing the elastomeric/microsphere mixture and subsequently through squeeze rollers to force the liquid into the fabric. The elastomer/microsphere coated fabric is then dried and/or vulcanized according to conventional methods to form a compressible fabric which is bound to fabric ply 34 by adhesive layer 30 before the multi-ply fabric stack of plys 32, 34 is laminated to compressible layer 24.

Bonded to the upper portion of top fabric ply 34 is elastomeric subface 44 formed from a high durometer, high tensile, low elongation compound (i.e., in comparison to the material used to form the printing face, as described below), which is preferably a compounded nitrile rubber. Alternately, however, a variety of water and solvent based elastomeric compounds, well known in the art, may be used instead of nitrile rubber in forming the subface. Subface 40 is provided to enhance the physical properties of top fabric ply 34 and thereby to enhance the stability of the printing face, thus resulting in improved print quality. In addition, the subface also serves to improve the resistance of the printing face to cutting while in use and thus blanket 10 is less susceptible to the consequent swelling and delamination which otherwise often occurs when liquids such as inks, oils and solvents enter blanket 10 through cuts in the printing face.

Elastomeric printing face 46, adapted to accept the print image from the printing plate and transfer it to, e.g., a paper substrate, is the uppermost layer on laminated blanket 10. In prior art blankets, the application of the elastomeric printing face was typically carried out by the well known method of knife over roll spreading in which a solvated elastomeric compound is spread in numerous successive passes, applying a thickness of about 0.0254 mm (0.001") with each pass, over, e.g., a subface or upper fabric layer.

Blanket 10 of the present invention differs, however, from the prior art in that, in the invention, the face, comprised of an elastomeric compound, is applied without the use of solvents. Moreover, the face is also applied directly to the subface in a single pass by a process such as calendaring. This method provides obvious advantages of improved efficiency and a reduced need for environmental controls due to the absence of organic solvents.

Moreover, as pointed out above, in comparison to the material used to form the subface, the elastomeric material used to form the printing face is lower in durometer and tensile strength and higher in elongation. That is, the subface of the present invention preferably has a compression set at least about 3 times lower than that of the printing face, with a 3-5 times improvement in tensile strength compared to the printing face, and a hardness value of at least about 10-12 points higher than the face, as measured on the Shore A scale.

In addition, printing blankets of the type described above are provided with a roughened surface profile to reduce dot gain while maintaining good release properties for the blanket. Such roughness profiles have, in the past, been produced either by molding during cure or by buffing the cured face with medium or coarse grit sandpaper, which is well known in the art. The surface profile is thereafter measured by, e.g., a device known as a profilometer (manufactured by the Perthen Corporation), which is also well known in the art. The surface profiles of prior art laminated blanket printing faces typically have a roughness average (i.e., "RA") of 1.0 to 1.8 µm while cast blankets, which do not have good release properties, typically have an RA of 0.3 to 0.5 µm. In this regard, it is important to note that the higher the roughness average, the worse the print quality becomes due to decreasing uniformity of the dots.

In blanket 10 of the present invention, however, the roughness average of printing face 42 is adjusted to above about 0.6 µm but below about 0.95 µm, and preferably between about 0.7 to 0.9 µm by buffing with fine sandpaper. The advantage of this treatment is that it affords excellent release properties to the blanket while also resulting in an improved structure of the printed dots, thus providing both improved print quality and releasability to the blanket of the invention. Alternately, this effect may also be achieved by a number of alternate methods well known in the art, such as molding.

### EXAMPLES

The following non-limiting Examples are provided solely for the purpose of illustration and are not to be construed as limiting the invention in any manner.

### Example 1

The Tables and Examples set forth below describe particular steps and materials for use in practicing the best known mode of the invention taught herein.

**TABLE I**

| **FABRICS** | | | |
|---|---|---|---|
| | Bottom Ply | Center Ply | Top Ply |
| 1. Yarn compositions | Warp: 20/2 ply Long Staple Cotton | 30/2 ply Long Staple Cotton | 36.5 Singles 50/50 Polyester/Cotton Blend |
| | Fill: 20/1 ply High Wet Modulus Rayon | 30/1 ply High Wet Modulus Rayon | 37.5 singles 50/50 Polyester/Cotton Blend |
| 2. Yarn Count | Warp: 22.8/cm(58/inch) | 29.9/cm(76/inch) | 40.2/cm(102/inch) |
| | Fill: 22.0/cm(56/inch) | 21.7/cm(55/inch) | 31.1/cm(79/inch) |
| 3. Weight | 0.203±0.0068kg/m² (6.0±0.2 oz./yd.²) | 0.173±0.0068kg/m² (5.1±0.2 oz./yd²) | 0.129±0034kg/m² (3.8±0.1 oz./yd.) |
| 4. Gauge | 0.38±0.0254mm (0.015"±0.001") | 0.279±0.0127mm (0.011"±0.0005") | 0.228±0.0254mm (0.009"±0.001") |
| 5. Tensile Strength (lbs/in.) kN/m | Warp: ≥28 (≥160) | ≥26.25 (≥150) | ≥12.25 (≥70) |
| | Fill: ≥10.5 (≥60) | ≥7 (≥40) | ≥10.5 (≥60) |
| 6. Residual Stretch | ≤1.9% | ≤2.2% | 6-10% |
| 7. Finish | Fluorocarbon treated | ---- | --- |

**TABLE II**

| FABRIC TREATMENT | |
|---|---|
| Cell Producing Media: | F-80 SD Microspheres (produced by Matsumoto Yushi-Seiyaku Co., Ltd.) |
| Binder: | Compounded Nitrile Latex |

**TABLE III**

| COMPRESSIBLE LAYER | |
|---|---|
| Cell Producing Media: | UCAR BJO-093 Phenolic Microspheres (produced by Union Carbide) |
| Matrix: | Compounded Nitrile Rubber |

**TABLE IV**

| OTHER COMPOUNDS | |
|---|---|
| Adhesive: | Compounded Nitrile Rubber |
| Subface: | Compounded Nitrile Rubber |
| Face: | Nitrile/Polysulfide Blend |

In forming printing blanket 10 with the materials described above, the unexpanded microspheres (i.e., F-80 SD) were dispersed within the nitrile latex used to form the binder for the fabric plys at a loading of 6% by dry weight of binder. One side of each of bottom fabric ply 12 and top fabric ply 34, as well as both sides of center fabric ply 32, were given two passes of the latex mixture on a knife over roll spreader and passed through a spreader oven at a speed and temperature sufficient to dry, but not, cure, the latex. The resultant coated fabric plys were then passed once again through the spreader oven at a temperature sufficient to simultaneously expand the microspheres and cure the latex. Fabric plys 32 and 34 were adhesively joined and then laminated, together with fabric ply 12, with the compressible layer 24, by methods well known in the art. Thereafter the subface and face compounds were applied to the top fabric ply, with the face being calendared onto the subface. The completed composite was then cured in the normal manner and the face was buffed to a surface roughness of between about 0.7 to 0.9 µm with a 400 grit sandpaper. The improved compressible printing blanket 10 thus produced was found to overcome substantially all of the drawbacks discussed above which were associated with prior art printing blankets.

Examples 2 and 3, below, illustrate the improvement in smash protection provided by interposing at least two fabric plys between the compressible layer and the elastomeric printing face within a printing blanket of the type described herein.

### Example 2

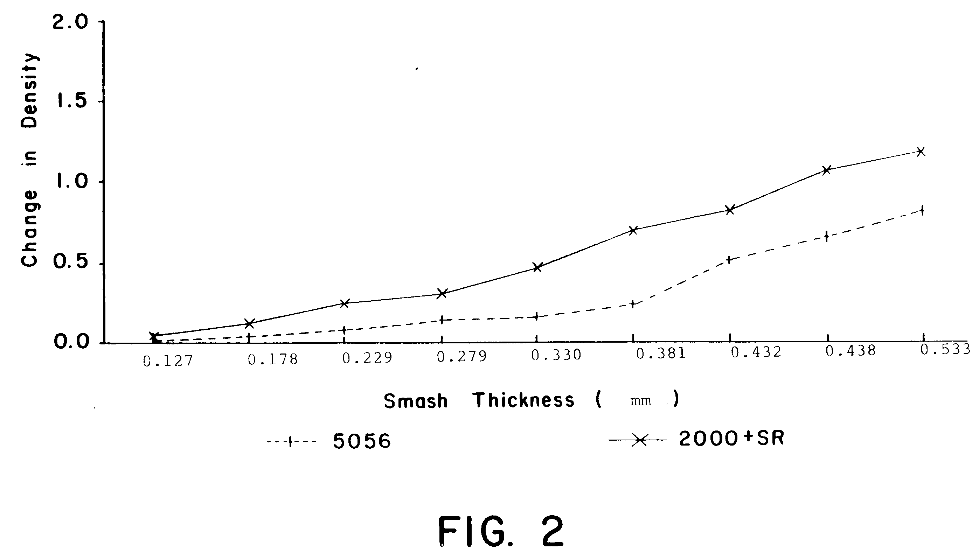

Fig. 2 graphically illustrates the results obtained in a smash test comparison between a type 5056 printing blanket and a type 2000+SR blanket produced according to the prior art. That is, the 5056 blanket comprises, from top to bottom, a printing face, a subface, two intermediate fabric plys, a compressible layer and a base fabric ply. In contrast, the prior art 2000+SR blanket comprises only a printing face, a single intermediate fabric ply, a compressible layer and a base ply formed of two fabric layers. In both blankets, i.e., the 5056 and the prior art 2000+SR, the compressible layer was formed with the use of the well known salt leaching technique. The 5056 blanket thus differs from the 2000+SR in two respects, i.e., the compressible layer of the 5056 is protected by two fabric plys, and this blanket is further provided with a subface, in contrast to the 2000+SR blanket which lacks such a subface.

The improved performance, i.e. increased smash resistance, offered by the 5056 blanket over that of the 2000+SR is therefore clearly illustrated upon a review of Fig. 2 in that the change in density for the 5056 blanket is significantly lower (as the smash thickness increases) than is achieved for the prior art 2000+SR blanket. This improved smash resistance leads ultimately to improved printing performance by the 5056 blanket over that offered by the 2000+SR, which is, of course, one of the objects of the present invention.

### Example 3

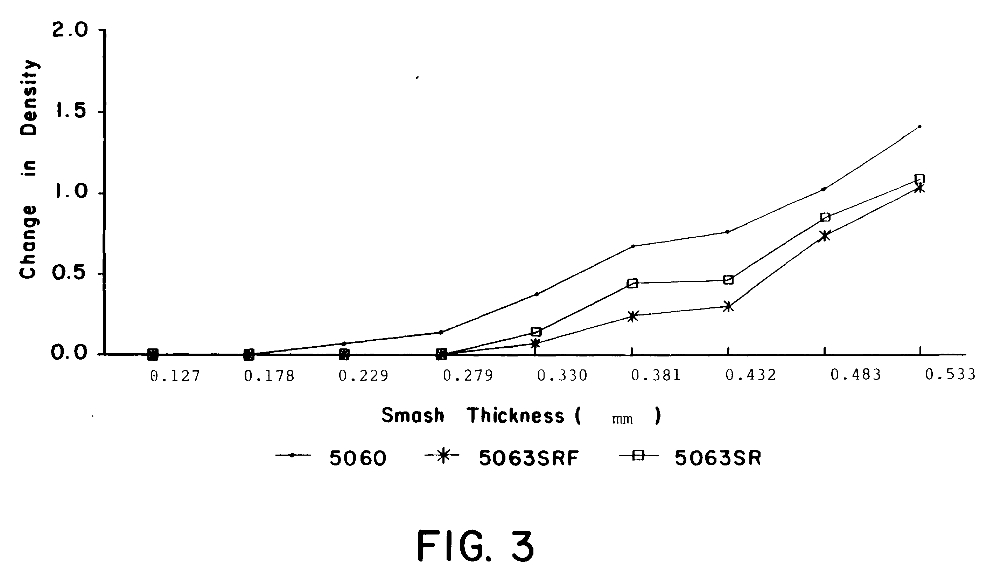

Fig. 3 graphically displays the results obtained in a second set of smash test comparisons. The 5060 blanket is similar in configuration to the 2000+SR blanket discussed in Example 2 (i.e., the compressible layer is positioned beneath a single fabric layer), except that the compressible layer is formed with the use of a plurality of expanded microspheres. In addition, the 5063 SR and 5063 SRF comprise the same layers as the 5056 blanket described above, i.e., there are at least two fabric plys between the compressible layer and the printing face. Although both the 5063 SR and 5063 SRF comprise a compressible layer formed with microspheres, the two blankets differ in that the 5063 SRF blanket is provided with a surface profile according to the present invention, i.e., having an RA (roughness average) of above about 0.6 µm but below about 0.95 µm, while the 5063 SR blanket lacks such a surface profile.

A review of Fig. 3 readily demonstrates that the best results, i.e., in terms of improvement in smash resistance, were obtained, first, by the 5063 SRF blanket, then the 5063 SR blanket, with the (prior art) 5060 blanket having the least acceptable performance.

### Example 4

One example of a preferred compressible fabric and a process for forming the same, is as follows:

### Fabric:

Yarn Composition:
   Warp: 20/2 ply Long Staple Cotton
   Fill: 20/1 ply H.W.M. Rayon
Yarn Count:
   Warp: (58 ± 3) 22.8 ± 1.18/cm
   Fill: (60 ± 3) 23.6 ± 1.18/cm
Weight:
   (6 ± 0.2 oz./yd.²) 0.203 ± 0.00678 kg/m²
Thickness:
   (0.015" ± .001") 0.381 ± 0.254 mm
Tensile Strength:
   Warp: 26.3 kN/m {67.5 kg (150 lbs.)/(in.)}
   Fill: 10.5 kN/m {27 kg (60 lbs.)/(in.)}
% Residual Stretch:
   1.9% (max.)

### Microballoon:

### Union Carbide UCAR BJO-093 phenolic resin (thermoset)

Avg. Particle Size: 90(µm)
Density: 0.023 (gms/cc) g/cm²

### Elastomeric Matrix

| Hycar 1572 x 64 (self curing nitrile latex elastomer) | |
|---|---|
| Total Solids | 47.3 |
| pH | 6.5 |
| Viscosity (cps) | (85) 0.085 Pa.s |
| Surface tension (dynes/cm) | (43) 43 mN/m |

The process used to produce the fabric, comprising three steps, is described as follows:
1) The microspheres are added to the nitrile latex and the mixture is stirred until the microballoons are completely dispersed.
2) The microsphere/latex mixture is then applied to the fabric via a dip tank with squeeze rollers and doctor blades. The dipping and squeeze rollers are used to insure maximum fabric penetration, and the doctor blades are used to scrape off excess surface material.
3) The composite web is then passed through a conventional coating oven or passed over drying cans to facilitate vulcanization. The vulcanization time is typically 3-5 minutes at 121-148°C (250-300°F).

## Claims

1. A printing blanket comprising an elastomeric printing face having a surface profile with a roughness average of above about 0.6 µm (microns) and below about 0.95 µm (microns) to enhance releasability while reducing dot gain during printing operations.

2. A printing blanket as claimed in claim 1 further comprising at least one fabric ply and a compressible layer beneath the printing face.

3. A printing blanket as claimed in claim 2 further comprising a subface immediately beneath the printing face, wherein the subface is formed from a high durometer, high tensile, low elongation elastomeric compound.

4. A printing blanket as claimed in claim 2 or claim 3 which further comprises at least two fabric plys between said compressible layer and said elastomeric printing face, such that said compressible layer is thereby protected from at least a portion of the stresses occurring at said printing face.

5. A printing blanket as claimed in claim 1 wherein said elastomeric printing face has a surface profile with a roughness average of between about 0.7 to 0.9 µm (microns).

6. A printing blanket as claimed in claim 4 further comprising a base fabric ply with a protective coating thereon to prevent absorption and wicking of water, inks and solvents therethrough.

7. A printing blanket as claimed in claim 6 wherein said protective coating comprises a fluorocarbon or a silicone material.

8. A printing blanket as claimed in claim 4 or claim 6, wherein at least one of the fabric plys and/or the base fabric ply comprises a plurality of warp and fill fibers or yarns forming a fabric substrate, and a binder material substantially impregnating at least one side of the fabric substrate; the binder material providing no substantial contribution to the overall thickness of the partially impregnated fabric substrate and containing a plurality of cells in an amount sufficient to impart increased compressibility properties to the fabric ply.

9. A printing blanket as claimed in claim 8 wherein the warp fibers or yarns have a tensile strength of at least about 26.25kN/m (150 pounds per inch), the fill fibers or yarns have a tensile strength of at least about 10.5kN/m (60 pounds per inch) and the fabric substrate has a weight of between about 0.14 and 0.27 kg/m² (4 and 8 ounces per square yard).

10. A printing blanket as claimed in claim 4 or claim 8 wherein said compressible layer is comprised of a matrix having a plurality of closed cells distributed substantially uniformly therethrough and such that said layer has substantially uniform compression characteristics.

11. A printing blanket as claimed in claim 10 wherein said matrix is a flexible thermoplastic or elastomeric material.

12. A printing blanket as claimed in claim 8 which further comprises a protective coating on at least one of said fabric plys to prevent absorption and wicking of water, inks and solvents therethrough.

13. A printing blanket as claimed in claim 12 wherein said protective coating comprises a fluorocarbon or a silicone material.

14. A printing blanket as claimed in claim 8, wherein the cells are formed from microspheres having a diameter of between about 1 and 200 µm (microns) and the microspheres are dispersed relatively uniformly throughout the binder material.

15. A printing blanket as claimed in claim 10, wherein the closed cells are formed from microspheres having a diameter of between about 1 and 200 microns and the microspheres are dispersed relatively uniformly throughout the matrix.

16. A printing blanket as claimed in claim 14 or claim 15, wherein the microspheres are formed from a material selected from the group consisting of thermoplastic resins, thermosetting resins, ceramics, glasses and sintered metals.

17. A printing blanket as claimed in claim 14 or claim 15, wherein the microspheres include a surface coating to facilitate bonding with the binder material and/or the matrix.

18. A printing blanket as claimed in claim 14 or claim 15, wherein the microspheres are present in the binder material and/or the matrix at a loading of about 4 to 90% by weight.

19. A printing blanket as claimed in claim 8, wherein the cells are formed from gas bubbles which are trapped within the binder material.

20. A printing blanket as claimed in claim 10 wherein the closed cells are formed from gas bubbles which are trapped within the matrix.

21. A printing blanket as claimed in claim 8, wherein the binder material is a thermoplastic resin, a thermosetting resin, a polyurethane or a natural or synthetic elastomer.

22. A printing blanket as claimed in claim 21, wherein the elastomer is a nitrile, neoprene or an acrylic elastomer.

23. A method of preparing a printing blanket having enhanced releasability and reduced dot gain during printing operations which comprises
providing a printing blanket having at least one fabric ply, an elastomeric printng face and a compressible layer positioned therebetween; and
grinding the printing face to a surface profile with a roughness average of above about 0.6 µm and below about 0.95 µm.

24. The method of claim 23 wherein a subface is provided beneath the printing face to improve the stability of the printing face and its resistance to cutting, and a supporting fabric ply is included to support the other layers, with the supporting fabric ply including a protective coating to prevent absorption or wicking of fluids into the blanket.

25. The method of claim 23 wherein at least one additional fabric ply is used and the additional fabric ply(s) are located between the printing face and the compressible layer.

26. The method of claim 23 wherein at least one fabric ply is a compressible fabric ply, and the printing face is ground to a surface profile with a roughness of between 0.7 and 0.9 µm.

27. The method of claim 26 wherein the compressible fabric ply is made by dipping the fabric into a latex solution of elastomeric material that contains microspheres therein and removing excess matrix material by scraping the fabric with a doctor blade.

## Patentansprüche

1. Drucktuch, umfassend eine elastomere Druckfläche mit einem Oberflächenprofil mit einer durchschnittlichen Rauhigkeit von mehr als etwa 0,6 µm (Mikron) und von weniger als etwa 0,95 µm (Mikron), um die Ablösungsfähigkeit zu erhöhen und gleichzeitig die Punktzunahme bei Druckvorgängen zu reduzieren.

2. Drucktuch nach Anspruch 1, ferner umfassend wenigstens eine Gewebelage und eine komprimierbare Schicht unterhalb der Druckfläche.

3. Drucktuch nach Anspruch 2, ferner umfassend eine Subfläche unmittelbar unterhalb der Druckfläche, wobei die Subfläche aus einer elastomeren Verbindung von hoher Härte, hoher Zugfestigkeit und niedriger Dehnung gebildet wird.

4. Drucktuch nach Anspruch 2 oder Anspruch 3, ferner umfassend wenigstens zwei Gewebelagen zwischen der genannten komprimierbaren Schicht und der genannten elastomeren Druckfläche, so daß die genannte komprimierbare Schicht dadurch vor wenigstens einem Teil der Belastungen geschützt wird, die an der genannten Druckfläche auftreten.

5. Drucktuch nach Anspruch 1, bei dem die genannte elastomere Druckfläche ein Oberflächenprofil mit einer durchschnittlichen Rauhigkeit zwischen etwa 0,7 und 0,9 µm (Mikron) hat.

6. Drucktuch nach Anspruch 4, ferner umfassend eine Basisgewebelage mit einer Schutzschicht darauf, um Absorption und Dochtwirkung von Wasser, Farben und Lösungsmitteln dadurch zu verhindern.

7. Drucktuch nach Anspruch 6, bei dem die genannte Schutzschicht ein Fluorkohlenwasserstoff- oder ein Silikonmaterial umfaßt.

8. Drucktuch nach Anspruch 4 oder Anspruch 6, bei dem wenigstens eine der Gewebelagen und/oder die Basisgewebelage eine Mehrzahl von Kett- und Schußfasern oder -garnen umfaßt, die ein Gewebesubstrat bilden, sowie ein Bindematerial, das im wesentlichen wenigstens eine Seite des Gewebesubstrats imprägniert, wobei das Bindematerial keinen wesentlichen Beitrag zur Gesamtstärke des teilweise imprägnierten Gewebesubstrats leistet und eine Mehrzahl von Zellen in einer Menge enthält, die ausreicht, um der Gewebelage erhöhte Komprimierbarkeitseigenschaften zu verleihen.

9. Drucktuch nach Anspruch 8, bei dem die Kettfasern oder -garne eine Zugfestigkeit von wenigstens etwa 26,25 kN/m (150 lbs pro Zoll) haben, die Schußfasern oder -garne eine Zugfestigkeit von wenigstens etwa 10,5 kN/m (60 lbs pro Zoll) haben, und das Gewebesubstrat ein Gewicht zwischen etwa 0,14 und 0,27 kg/m² (4 bis 8 Unzen pro Quadratyard) hat.

10. Drucktuch nach Anspruch 4 oder Anspruch 8, bei dem die genannte komprimierbare Schicht aus einer Matrix mit einer Mehrzahl von geschlossenen Zellen besteht, die im wesentlichen gleichförmig und so dadurch verteilt sind, daß die genannte Schicht im wesentlichen gleichförmige Kompressionscharakteristiken aufweist.

11. Drucktuch nach Anspruch 10, bei dem die genannte Matrix ein flexibles thermoplastisches oder elastomeres Material ist.

12. Drucktuch nach Anspruch 8, ferner umfassend eine Schutzschicht auf wenigstens einer der genannten Gewebelagen, um Absorption und Dochtwirkung von Wasser, Farben und Lösungsmitteln dadurch zu verhindern.

13. Drucktuch nach Anspruch 12, bei dem die genannte Schutzschicht ein Fluorkohlenwasserstoff- oder ein Silikonmaterial umfaßt.

14. Drucktuch nach Anspruch 8, bei dem die Zellen aus Mikrosphären mit einem Durchmesser zwischen etwa 1 und 200 µm (Mikron) gebildet werden, und die Mikrosphären relativ gleichmäßig durch das Bindematerial dispergiert sind.

15. Drucktuch nach Anspruch 10, bei dem die geschlossenen Zellen aus Mikrosphären mit einem Durchmesser zwischen etwa 1 und 200 Mikron gebildet werden, und die Mikrosphären relativ gleichmäßig durch die Matrix dispergiert sind.

16. Drucktuch nach Anspruch 14 oder Anspruch 15, bei dem die Mikrosphären aus einem Material gebildet werden, das ausgewählt wird aus der Gruppe bestehend aus Thermoplastharzen, Duroplastharzen, Keramik, Glas und Sintermetallen.

17. Drucktuch nach Anspruch 14 oder Anspruch 15, bei dem die Mikrosphären eine Oberflächenschicht aufweisen, die die Bindung mit dem Bindematerial und/oder der Matrix erleichtert.

18. Drucktuch nach Anspruch 14 oder Anspruch 15, bei dem die Mikrosphären in dem Bindematerial und/oder der Matrix mit einer Konzentration von etwa 4 bis 90 Gew.-% vorliegen.

19. Drucktuch nach Anspruch 8, bei dem die Zellen aus Gasblasen gebildet werden, die in dem Bindematerial eingeschlossen sind.

20. Drucktuch nach Anspruch 10, bei dem die geschlossenen Zellen aus Gasblasen gebildet werden, die in der Matrix eingeschlossen sind.

21. Drucktuch nach Anspruch 8, bei dem das Bindematerial ein Thermoplastharz, ein Duroplastharz, ein Polyurethan oder ein natürliches oder synthethisches Elastomer ist.

22. Drucktuch nach Anspruch 21, bei dem das Elastomer ein Nitril-, Neopren- oder ein Acrylelastomer ist.

23. Verfahren zur Herstellung eines Drucktuches mit verbesserter Ablösbarkeit und verringerter Punktzunahme bei Druckvorgängen, umfassend
das Bereitstellen eines Drucktuches mit wenigstens einer Gewebelage, einer elastomeren Druckfläche und einer dazwischen positionierten komprimierbaren Schicht; und
Schleifen der Druckfläche auf ein Oberflächenprofil mit einer durchschnittlichen Rauhigkeit über etwa 0,6 µm und unter etwa 0,95 µm.

24. Verfahren nach Anspruch 23, bei dem eine Subfläche unterhalb der Druckfläche vorgesehen ist, um die Stabilität der Druckfläche und ihre Schnittbeständigkeit zu verbessern, und eine Auflagegewebelage vorgesehen ist, um die übrigen Schichten zu tragen, wobei die Auflagegewebelage eine Schutzschicht aufweist, um Absorption oder Dochtwirkung von Fluiden in das Tuch zu verhindern.

25. Verfahren nach Anspruch 23, bei dem wenigstens eine zusätzliche Gewebelage verwendet wird und die zusätzliche(n) Gewebelage(n) sich zwischen der Druckfläche und der komprimierbaren Schicht befindet/befinden.

26. Verfahren nach Anspruch 23, bei dem wenigstens eine Gewebelage eine komprimierbare Gewebelage ist, und die Druckfläche so geschliffen wird, daß sie ein Oberflächenprofil mit einer Rauhigkeit zwischen 0,7 und 0,9 µm hat.

27. Verfahren nach Anspruch 26, bei dem die komprimierbare Gewebelage dadurch hergestellt wird, daß das Gewebe in eine Latexlösung aus elastomerem Material getaucht wird, das Mikrosphären darin enthält, und daß überschüssiges Matrixmaterial durch Abschaben des Gewebes mit einem Rakelmesser beseitigt wird.

## Revendications

1. Un blanchet d'impression englobant une face d'impression élastomère ayant un profil de surface avec une rugosité moyenne d'au-dessus de 0,6 µm (microns) environ et au-dessous de 0,95 µm (microns) environ pour en améliorer l'aptitude à la séparation tout en réduisant le gain de points pendant les opérations d'impression.

2. Un blanchet d'impression selon la revendication 1, qui englobe de plus au moins une nappe textile et une couche compressible au-dessous de la face d'impression.

3. Un blanchet d'impression selon la revendication 2, qui englobe de plus une sous-face immédiatement au-dessous de la face d'impression, la sous-face étant formée à partir d'un composé élastomère à haut degré de dureté, à haute résistance à la traction et à faible coefficient d'allongement.

4. Un blanchet d'impression selon la revendication 2 ou la revendication 3, qui englobe de plus au moins deux nappes textiles entre la couche compressible et ladite face d'impression élastomère, de façon telle que ladite couche compressible est ainsi protégée contre au moins une partie des sollicitations qui surviennent au niveau de ladite surface d'impression.

5. Un blanchet d'impression selon la revendication 1, dans lequel ladite face d'impression élastomère a un profil de surface avec une rugosité moyenne de 0,7 à 0,9 µm (microns) environ.

6. Un blanchet d'impression selon la revendication 4, qui englobe de plus une nappe textile de base recouverte d'un enrobage protecteur pour éviter l'absorption et la pénétration par effet de mèche d'eau, d'encres et de solvants.

7. Un blanchet d'impression selon la revendication 6, dans lequel ledit enrobage protecteur englobe un hydrocarbure fluoré ou un matériau au silicone.

8. Un blanchet d'impression selon la revendication 4 ou la revendication 6, dans lequel une au moins des nappes textiles et/ou la nappe textile de base englobe une pluralité de fibres ou de fils de chaîne et de trame qui forment un substrat textile, et un matériau liant qui imprègne sensiblement au moins une face du substrat textile, le matériau liant n'apportant aucune contribution sensible à l'épaisseur hors-tout du substrat textile partiellement imprégné et contenant une pluralité de cellules en une quantité suffisante pour conférer à la nappe textile des propriétés accrues de compressibilité.

9. Un blanchet d'impression selon la revendication 8, dans lequel les fibres ou fils de la chaîne ont une résistance à la traction minimum d'environ 26,25 kN/m (150 pounds par pouce), les fibres ou fils de trame ont une résistance à la traction minimum d'environ 10,5 kN/m (60 pounds par pouce) et le substrat textile a un poids compris entre environ 0,14 et 0,27 kg/m² (4 et 8 onces par square yard).

10. Un blanchet d'impression selon la revendication 4 ou la revendication 8, dans lequel ladite couche compressible se compose d'une matrice ayant une pluralité de cellules formées réparties sensiblement uniformément à travers et de façon telle que ladite couche a des caractéristiques de compression sensiblement uniformes.

11. Un blanchet d'impression selon la revendication 10, dans lequel ladite matrice est un matériau flexible thermoplastique ou élastomère.

12. Un blanchet d'impression selon la revendication 8, qui englobe de plus un enrobage protecteur sur au moins une desdites nappes textiles pour éviter l'absorption et la pénétration par effet de mèche d'eau, d'encres et de solvants.

13. Un blanchet d'impression selon la revendication 12, dans lequel ledit enrobage protecteur englobe un hydrocarbure fluoré ou un matériau au silicone.

14. Un blanchet d'impression selon la revendication 8, dans lequel les cellules sont formées à partir de microsphères ayant un diamètre de 1 à 200 µm (microns) environ et les microsphères sont dispersées relativement uniformément à travers le matériau liant.

15. Un blanchet d'impression selon la revendication 10, dans lequel les cellules fermées sont formées à partir de microsphères ayant un diamètre de 1 à 200 microns environ et les microsphères sont dispersées relativement uniformément à travers la matrice.

16. Un blanchet d'impression selon la revendication 14 ou la revendication 15, dans lequel les microsphères sont formées à partir d'un matériau sélectionné parmi le groupe englobant les résines thermoplastiques, les résines thermodurcissables, les céramiques, les verres et les métaux frittés.

17. Un blanchet d'impression selon la revendication 14 ou la revendication 15, dans lequel les microsphères englobent un enrobage superficiel pour en faciliter la liaison avec le matériau liant et/ou la matrice.

18. Un blanchet d'impression selon la revendication 14 ou la revendication 15, dans lequel les microsphères sont présentes dans le matériau liant et/ou la matrice avec un coefficient de charge d'environ 4 à 90% en poids.

19. Un blanchet d'impression selon la revendication 8, dans lequel les cellules sont formées à partir de bulles de gaz qui sont piégées au sein du matériau liant.

20. Un blanchet d'impression selon la revendication 10, dans lequel les cellules fermées sont formées à partir de bulles de gaz qui sont piégées à l'intérieur de la matrice.

21. Un blanchet d'impression selon la revendication 8, dans lequel le matériau liant est une résine thermoplastique, une résine thermodurcissable, un polyuréthane ou un élastomère naturel ou synthétique.

22. Un blanchet d'impression selon la revendication 21, dans lequel l'élastomère est un nitrile, un néoprène ou un élastomère acrylique.

23. Un procédé de préparation d'un blanchet d'impression ayant une aptitude accrue à la séparation et un gain de points réduit pendant les opérations d'impression, le procédé englobant :
production d'un blanchet d'impression ayant au moins une couche textile, une face d'impression élastomère et une couche compressible placée entre les deux ; et
meulage de la face d'impression jusqu'à obtenir un profil de surface ayant une rugosité moyenne supérieure à environ 0,6 µm et inférieure à environ 0,95 µm.

24. Le procédé de la revendication 23, selon lequel une sous-face est prévue au-dessous de la face d'impression pour améliorer la stabilité de la face d'impression et sa résistance à la coupure, et une nappe textile de support est incluse pour supporter les autres couches, la nappe textile de support englobant un enrobage protecteur pour empêcher l'absorption ou la pénétration par effet de mèche de fluides dans le blanchet.

25. Le procédé de la revendication 23, selon lequel au moins une nappe textile additionnelle est utilisée et la (ou les) nappe(s) textile(s) est/sont placée(s) entre la face d'impression et la couche compressible.

26. Le procédé de la revendication 23, selon lequel une nappe textile au moins est une nappe textile compressible, et la face d'impression est meulée jusqu'à obtenir un profil de surface ayant une rugosité comprise entre 0,7 et 0,9 µm.

27. Le procédé de la revendication 26, selon lequel la nappe textile compressible est réalisée en plongeant le textile dans une solution d'un matériau élastomère dans le latex qui contient des microsphères puis en enlevant le matériau pour matrice en excédent en grattant le textile avec une lame docteur.
